# EUROPEAN PATENT SPECIFICATION

(11) **EP 0 544 476 B1**
(45) Date of publication and mention of the grant of the patent: **14.06.1995**
(21) Application number: 92310657.9
(22) Date of filing: 23.11.1992
(51) Int. Cl.: F16L 1/036

(54) **Apparatus and methods for laying pipes**
Vorrichtung und Methode zum Verlegen von Rohren
Dispositif et procédés pour la pose de conduits

(30) Priority: 28.11.1991 GB 9125346
(43) Date of publication of application: 02.06.1993
(73) Proprietor: PONT-A-MOUSSON S.A., 54000 Nancy (FR)
(72) Inventor: Stevens, William, Nottingham NG10 5AA (GB)
(74) Representative: Heath, Peter William Murray

(56) References cited:
- DE-A- 2 425 249
- US-A- 2 538 365

## Description

This application relates to apparatus and methods for laying pipes, and more particular for laying pipes with push-fit spigot and socket flexible joints between them within a prepared trench in the ground.

It is known to fit together pipes with rigid joints (e.g. welded polyethylene or steel for example) by jointing the pipes at ground level and lowering an elongate portion of the jointed pipeline into a prepared trench. With such a form of installation the trench width corresponds to the pipe diameter with the minimum of clearance, which is considerably narrower than that needed for push-fit jointed pipes.

It is known to lay pipes with push-fit spigot and socket flexible joints such as those formed by digging a trench of sufficient width to enable the joint to be assembled by hand on the bed of the trench with the aid of appropriate jointing tackle or earth moving equipment.

The trench digging and earth reinstatement costs for push-fit spigot and socket flexible jointed pipes, because of the enlarged size of trench needed as hereinabove described, represents a considerable proportion of the overall installation cost, and this represents a significant problem in association with the installation of push-fit pipes to be laid within trenches.

DE-A-2 425 249 discloses a method for the mechanized laying of pipe lines in an open trench characterised by aligning individual pipes of the previously assembled pipe string above the trench in a pivotable drivable assembly platform in which the jointing is effected and the assembled pipe line section is lowered into the pipe trench down a slide suitably connected to an assembly platform. Such an arrangement does not disclose the present invention and its advantageous features.

It is an object of the present invention to overcome or at least substantially reduce this problem.

In accordance with one aspect of the present invention there is provided apparatus for laying a succession of push-fit spigot and socket flexible jointed pipes within a prepared trench in the ground comprising a conveyor trolley carrying an elongate conveyor which is arranged on the trolley such as in use to lie inclined within the trench, the conveyor having one end disposed at or adjacent the base of the trench, and the other end at least part way up the height of the trench, the conveyor trolley being capable of movement along the trench in the direction of the conveyor's upper end, and means being provided for holding the trolley stationary along the trench characterised by means for engaging an upper end of a pipe disposed on the conveyor, said means connecting to a pulling line passing along the trolley in the direction of the lower end of the conveyor to a turning means and then returning in the direction of the upper end of the conveyor to pulling means.

According to another aspect of the present invention there is provided a method of laying a succession of push-fit spigot and socket flexible jointed pipes within a prepared trench in the ground by disposing along the prepared trench a conveyor trolley carrying an elongate conveyor inclined within the trench, having one end of the conveyor disposed at or adjacent the base of the trench, and with the other end at least part way up the height of the trench, the conveyor trolley being capable of being held stationary along the trench and of movement along the trench in the direction of its upper end; placing a push-fit spigot and socket flexible jointed pipe on the conveyor trolley and allowing it to move down the inclined conveyor; placing another flexible push-fit spigot and socket joint pipe on the conveyor trolley and allowing it also to move down the inclined conveyor until its spigot or socket engages the adjoining socket or spigot end respectively (as the case may be) of the pipe previously disposed on the conveyor, characterised by engaging the upper end of the upper pipe with a pulling line passing along the conveyor trolley in the direction of the conveyor to a turning means and then returning the line towards the upper end of the conveyor to pulling means; holding the conveyor trolley against movement along the trench and, by means of said pulling means, exerting tensile force on the pulling line whereby the upper pipe is urged downwardly along the conveyor to form a joint between the juxtaposed spigot and socket of the upper pipe and of the lower pipe; releasing the conveyor trolley for movement along the trench and, by means of said pulling means, exerting tensile force on the pulling line whereby to move the conveyor within the trench in the direction of the higher end of the conveyor, until the upper pipe is located lower down the conveyor such that yet another pipe can be laid on the conveyor above and behind the upper pipe and the operation repeated.

It is to be understood that the sockets of the spigot and socket pipes may be integral or provided by means of coupling sleeves.

The pipes may be loaded onto the conveyor spigot end first or socket end first.

The trolley for the elongate conveyor may be provided with sets of wheels whereby the pipes may roll with easy movement down the inclined conveyor. The length of the conveyor will be appropriate and compatible with the pipes being laid, but conveniently may be somewhat less than the length of a pipe being laid, although in other circumstances it may be convenient to have a conveyor of a length longer than one or more pipes.

The lower end of the conveyor trolley may be mounted on means for ready movement along the bed of the trench, such means comprising wheels or, preferably, a skid for example.

Additionally, the conveyor trolley may be supported in its inclined disposition by means of at least one pair of wheels side by side, carried on a frame attached to the conveyor trolley, which pair or pairs of wheels are separated apart by a greater width than the intended trench within which the pipes are to be laid and which thereby in use run along the ground each side of the trench. The means for holding the conveyor trolley stationary and allowing movement thereof may be any convenient means, but where wheels of the kind just mentioned are used, such means may comprise brakes to the wheels. Alternatively, for example, the means for holding the conveyor trolley stationary may comprise ground anchors.

In some circumstances it may not be possible to restrain the trolley from moving during jointing by applying brakes or land anchors (e.g. on wet surfaces or poor ground). To enable the arrangement to cope with such circumstances, the winch may be mounted on the trolley above the wheels, for example, to make it self-propelled.

With the winch in this position joints can be made without the need for brakes or land anchors by temporarily fastening the upper end of the pipe already on the conveyor to the trolley (for example, where the upper end of that pipe is the socket end, by locating a bifurcated locking fork behind the socket engageable with lugs or similar receptors on the trolley or conveyor) while the load is being applied to the upper end of the just laid upper pipe to form the necessary joint between the upper pipe and the lower pipe.

The pull line may be attached to the upper end of the upper pipe carried by the conveyor by means of a hook for example, the pull line passing down along the conveyor to the means for turning the pull line which may comprise, for example, a pulley wheel, before passing to the pulling means. The pulling means may comprise any convenient device such as a mobile vehicle mounted winch arranged to be disposed above the trench, or a winch mounted within the trench beyond the conveyor trolley or mounted on the conveyor.

By means of the invention a suitable method and apparatus are provided by means of which narrow trenching techniques can be used for push-fit spigot and socket flexible jointed pipe laying.

It is to be appreciated that by ensuring by means of the pulling line engaging the upper socket end of the last pipe to be placed on the conveyor trolley, not only is it possible to ensure, with the trolley held stationary, that make-up of the joint is achieved, but also that the joint is in no way dismantled during the laying operation since the pulling force (to move the trolley forward) is also used to maintain the pipe-train in compression as the conveyor trolley is moved forward and the pipes successively laid on the trench bed.

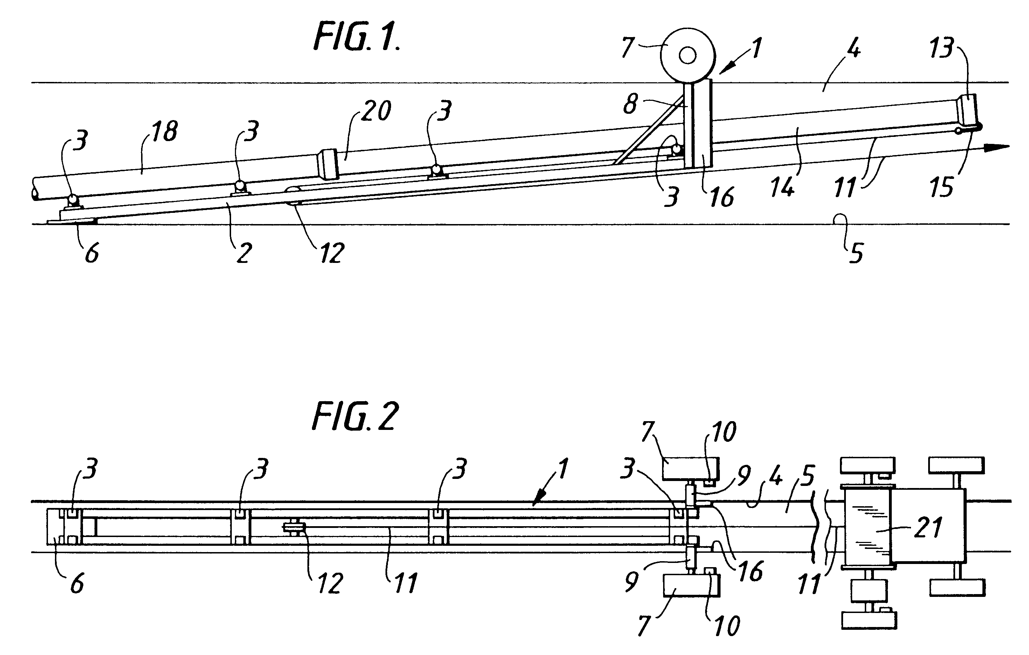

In order that the invention may be more readily understood one embodiment thereof will now be described by way of example with reference to the accompanying drawings in which:-
Figure 1 is a schematic side elevation of apparatus in accordance with the invention with pipes on the conveyor;
Figure 2 is a plan view of the apparatus of Figure 1, without pipes;
Figures 3 (a), (b) and (c) show in schematic side elevation the sequence of a pipe laying operation with the apparatus of Figure 1; and
Figure 4 is a schematic side elevation illustrating the loading of a pipe onto the apparatus of Figure 1.

Referring now to the drawings it will be seen that the apparatus for laying push-fit flexible jointed spigot and socket pipes within a prepared trench 4 comprises a conveyor trolley 1 incorporating an elongate conveyor body 2 carrying four sets of wheels 3 by means of which pipes to be laid can readily slide down the conveyor which, in use, is held in an inclined disposition.

The trolley 1 is supported at its lower end upon the trench bed 5 by means of a skid 6, and is held in its inclined disposition by wheels 7 carried on a frame 8 upstanding from the upper end of the conveyor 2, the wheels 7 being mounted on axles 9 which dispose them well outside the walls of the trench. It will be observed that the wheels are provided with brakes 10 to enable the trolley 1 conveyor to be held stationary with respect to the trench 4, or to move along within the trench 4, when they are engaged or disengaged respectively.

A pulling line in the form of a rope or cable 11 is connected to a vehicle mounted winding winch 21 disposed beyond the upper end of the conveyor trolley 1 over the trench, the pulling line 11 passing below the conveyor trolley 1, around a pulley wheel 12 and back to the socket end 13 of an upper pipe 14 disposed on the trolley conveyor 2, where it engages with the socket thereof by means of a hook 15.

Guide plates 16 are mounted on the wheel support frame 8 to help guide incoming pipes, and to shield the side walls of the trench 4 therefrom.

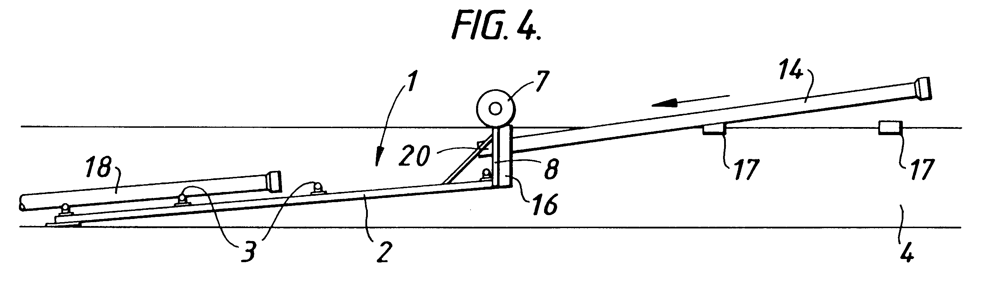

In operation, successive pipes 19, 18, 14 are loaded onto the trolley conveyor 2 from above by means of lifting tackle (not shown), or by rolling onto two independent roller conveyors 17 positioned ahead of the trolley 1 and across the line of the trench (see Figure 4). Once an upper pipe 14 is located on the trolley conveyor 2 with its spigot end 20 downwardly, it has its socket end 13 engaged with the hook 15 of the pulling line by an operator from above the trench. The brakes 10 of the wheels 7 of the conveyor trolley 1 are then engaged and the winch 21 activated so as to apply pulling tension to the pulling line 11 which causes the spigot 20 to engage in the socket of the next adjacent pipe 18 to form a joint therebetween. The brakes 10 of the trolley wheels 7 are then disengaged and the winch 21 continued to be activated so that the trolley 1 is now pulled towards the winch vehicle and the lowermost pipe 18 on the trolley conveyor 2 is laid onto the bed 5 of the trench 4. This operation can continue successively to build up a continuous line of pipework.

When laying push-fit pipes it is good practice to excavate beneath the socket end of each pipe to enable the barrel of the pipe to lay flat on the trench bed. To this end a small cutter (not shown) can be mounted under the conveyor trolley 1 and activated to excavate the socket hole in the appropriate place before laying the appropriate pipe with its socket in place.

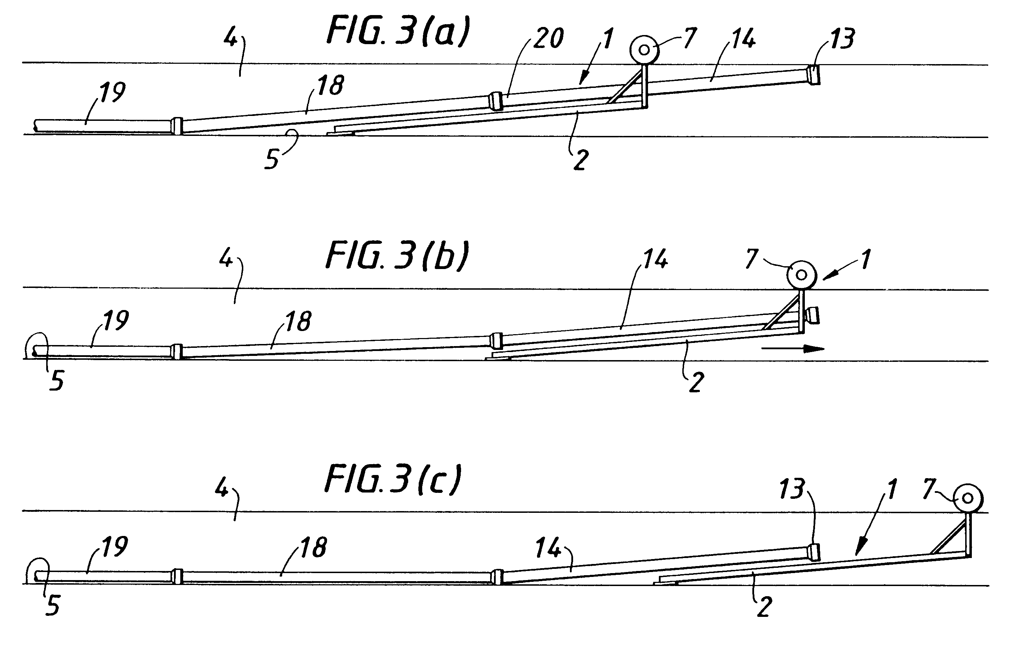

Reference to Figures 3 (a), (b) and (c) shows the sequence of operation of the method and apparatus of the present invention. Thus, in Figure 3 (a) an uppermost pipe 14 has just been placed at the upper end of the conveyor trolley 1 and, with the trolley wheels 7 held stationary, the joint between its spigot and the socket of the next succeeding pipe 18 can be made. In Figure 3 (b) the trolley 1 is shown being moved forward whereby the lower pipe 18 is allowed to roll from the trolley, whilst the upper pipe 14 rolls down it upon the sets of wheels.

In Figure 3 (c) the trolley 1 has now moved a sufficient distance to be able to receive another pipe for connection to the pipe 14 having its socket 13 lying approximately half way along the inclined length thereof.

By means of the invention we provide a method of and apparatus for laying pipe with push-fit spigot and socket flexible joints to be installed in narrow trenches in a simple and effective manner such that the costs for trenching, back-fill material if needed, and said reinstatement are substantially reduced. Additionally, and very importantly, the method allows such pipes to be laid quickly whilst maintaining compression at the pipe joints to ensure that the joints remain fully made.

It is to be understood that the foregoing is merely exemplary of methods of and apparatus for laying push-fit spigot and socket flexible jointed pipes in trenches in accordance with the invention and that modifications can readily be made thereto without departing from the true scope of the invention.

Thus, for example, the conveyor trolley may be provided with appropriate articulation of its wheels about a horizontal axis in the longitudinal direction of the trolley so that the conveyor can still hang vertically below the wheels when used on uneven ground. Again, the conveyor may be articulated about a vertical axis by means of a pivot point along the length of the conveyor to assist in the laying of pipes around a bend within the trench. In an alternative arrangement to that illustrated, to be able to readily accommodate uneven ground, the conveyor and trolley may be provided with a single wheel, for example, supporting the trolley and running within the trench upon the trench bed. Yet again, the trolley may include provision for enabling pipes to be laid under existing surface pipes running transversely cross the trench above the bed thereof. Thus, the conveyor may be detachable from the wheel assembly located at the upper end thereof, and may be provided with an additional skid at its upper, or front, end so that as the assembly reaches an existing transverse surface pipeline, the conveyor can be lowered onto the trench bed, the pulling cable can be passed under the existing surface pipeline, and laying of the new pipeline can continue under and beyond the existing transverse pipeline.

## Claims

1. Apparatus for laying a succession of push-fit spigot and socket flexible jointed pipes (14, 18, 19) within a prepared trench (4) in the ground comprising a conveyor trolley (1) carrying an elongate conveyor (2) which is arranged on the trolley (1) such as in use to lie inclined within the trench (4), the conveyor (2) having one end disposed at or adjacent the base (5) of the trench (4), and the other end at least part way up the height of the trench (4), the conveyor trolley (1) being capable of movement along the trench (4) in the direction of the conveyor's (2) upper end, and means (10) being provided for holding the trolley (1) stationary along the trench (4) characterised by means (15) for engaging an upper end of a pipe (14, 18, 19) disposed on the conveyor (2), said means (15) connecting to a pulling line (11) passing along the trolley (1) in the direction of the lower end of the conveyor (2) to a turning means (12) and then returning in the direction of the upper end of the conveyor (2) to pulling means (21).

2. Apparatus as claimed in Claim 1 characterised in that the trolley (1) for the elongate conveyor (2) is provided with sets of wheels (3) whereby the pipes (14, 18, 19) may roll with easy movement down the inclined conveyor (2).

3. Apparatus as claimed in Claim 1 or 2 characterised in that the length of the conveyor (2) is arranged to be less than the length of the pipes (14, 18, 19) being laid.

4. Apparatus as claimed in any one of the preceding Claims characterised in that the lower end of the conveyor trolley (1) is mounted on means (16) for ready movement along the bed (5) of the trench (4).

5. Apparatus as claimed in Claim 4 characterised in that the conveyor trolley (1) is mounted on a skid (6).

6. Apparatus as claimed in any one of the preceding Claims characterised in that the conveyor trolley (1) is supported in its inclined disposition by means of at least one pair of wheels (7) side by side carried on a frame (8) attached to the conveyor trolley (1), said pair or pairs of wheels (7) being separated apart by a greater width than the intended trench (4) within which the pipes (14, 18, 19) are to be laid.

7. Apparatus as claimed in Claim 6 characterised in that the means (10) for holding the conveyor trolley (1) stationary comprises brakes associated with at least one of said pair or pairs of wheels (7).

8. Apparatus as claimed in any one of the preceding Claims characterised in that the means (10) for holding the conveyor trolley (1) stationary comprise ground anchors.

9. Apparatus as claimed in any one of the preceding Claims characterised in that the pulling means (21) is mounted on the trolley, rendering the trolley (1) self propelled in operation.

10. Apparatus as claimed in any one of Claims 1 to 9 characterised in that the pulling means (21) comprises a mobile vehicle mounted winch arranged to be disposed above the trench (4).

11. A method of laying a succession of push-fit spigot and socket flexible jointed pipes (14, 18, 19) within a prepared trench (4) in the ground by disposing along the prepared trench (4) a conveyor trolley (1) carrying an elongate conveyor (2) inclined within the trench (4), having one end of the conveyor (2) disposed at or adjacent the base (5) of the trench (4), and with the other end at least part way up the height of the trench (4), the conveyor trolley (1) being capable of being held stationary along the trench (4) and of movement along the trench (4) in the direction of its upper end; placing a push-fit spigot and socket flexible jointed pipe (18) on the conveyor trolley (1) and allowing it to move down the inclined conveyor (2); placing another flexible push-fit spigot and socket joint pipe (14) on the conveyor trolley and allowing it also to move down the inclined conveyor (2) until its spigot or socket engages the adjoining socket (13) or spigot (20) end respectively (as the case may be) of the pipe previously disposed on the conveyor, characterised by engaging the upper end of the upper pipe (14) with a pulling line (11) passing along the conveyor trolley (1) in the direction of the conveyor (2) to a turning means (12) and then returning the line towards the upper end of the conveyor to pulling means (21); holding the conveyor trolley (1) against movement along the trench and, by means of said pulling means (21), exerting tensile force on the pulling line (11) whereby the upper pipe (14) is urged downwardly along the conveyor (2) to form a joint between the juxtaposed spigot and socket of the upper pipe (14) and of the lower pipe (18); releasing the conveyor trolley (1) for movement along the trench (4) and, by means of said pulling means (21), exerting tensile force on the pulling line (11) whereby to move the conveyor (2) within the trench (4) in the direction of the higher end of the conveyor (2), until the upper pipe (14) is located lower down the conveyor such that yet another pipe can be laid on the conveyor (2) above and behind the upper pipe (14) and the operation repeated.

12. A method as claimed in Claim 11 characterised in that the pulling means (21) are mounted on the conveyor trolley (1) and including the step of fastening the pipe already on the conveyor to the trolley whilst load is applied to an upper pipe (14) on the conveyor whereby to form the required joint between the upper pipe (14) and the lower pipe (18).

## Patentansprüche

1. Vorrichtung zum Verlegen einer Folge von elastischen, durch Zapfen und Steckdose verbundenen Schiebezitzrohren (14, 18, 19) in einem vorbereiteten Graben (4) in der Erde, die ein Förderlaufwerk (1) umfasst, das einen langgestreckten Förderer (2) trägt, der auf dem Laufwerk (1) so angeordnet ist, daß er während der Benutzung geneigt in dem Graben (4) liegt, wobei der Förderer (2) ein Ende an oder neben dem Boden (5) des Grabens (4) angeordnet hat, und das andere Ende wenigstens auf einem Stück entlang der Höhe des Grabens (4), wobei das Förderlaufwerk (1) sich entlang des Grabens (4) in die Richtung des oberen Endes des Förderers (2) bewegen kann, und ein Mittel (10) vorgesehen ist, um das Laufwerk (1) ortsfest entlang dem Graben (4) zu halten, gekennzeichnet durch ein Mittel (15), um in ein oberes Ende eines Rohrs (14, 18, 19) zu greifen, das auf dem Förderer (2) angeordnet ist, wobei das Mittel an eine Zugleitung (11) angeschlossen ist, die entlang dem Laufwerk (1) in der Richtung des unteren Endes des Förderers (2) zu einem Drehmittel (12) geht, und dann in die Richtung des oberen Endes des Förderers (2) zum Zugmittel (21) zurückkehrt.

2. Vorrichtung nach Anspruch 1, dadurch gekennzeichnet, daß das Laufwerk (1) für den langgestreckten Förderer (2) mit Sätzen von Rädern (3) versehen ist, wodurch die Rohre (14, 18, 19) mit leichter Bewegung den geneigten Förderer (2) herunterrollen können.

3. Vorrichtung nach Anspruch 1 oder 2, dadurch gekennzeichnet, daß die Länge des Förderers (2) so angeordnet ist, daß sie geringer als die Länge der Rohre (14, 18, 19) ist, die verlegt werden.

4. Vorrichtung nach einem der vorhergehenden Ansprüche, dadurch gekennzeichnet, daß das untere Ende des Förderlaufwerks (1) auf einem Mittel (16) zur betriebsfähigen Bewegung entlang des Bettes (5) des Grabens (4) angebracht ist.

5. Vorrichtung nach Anspruch 4, dadurch gekennzeichnet, daß das Förderlaufwerk (1) auf einer Gleitschiene (6) angebracht ist.

6. Vorrichtung nach einem der vorhergehenden Ansprüche, dadurch gekennzeichnet, daß das Förderlaufwerk (1) in seiner geneigten Anordnung durch wenigstens ein Paar Räder (7) unterstützt ist, die nebeneinander auf einem Rahmen (8) getragen werden, der an dem Förderlaufwerk (1) befestigt ist, wobei das Paar oder die Paare Räder (7) durch eine größere Breite als der beabsichtigte Graben (4), in dem die Rohre (14, 18, 19) verlegt werden sollen, voneinander getrennt sind.

7. Vorrichtung nach Anspruch 6, dadurch gekennzeichnet, daß das Mittel zum ortsfesten Halten des Förderlaufwerks (1) Bremsen umfasst, die wenigstens einem des Paars oder der Paare Räder (7) zugeordnet sind.

8. Vorrichtung nach einem der vorhergehenden Ansprüche, dadurch gekennzeichnet, daß das Mittel (10) zum ortsfesten Halten des Förderlaufwerks (1) Erdanker umfasst.

9. Vorrichtung nach einem der vorhergehenden Ansprüche, dadurch gekennzeichnet, daß das Zugmittel (21) auf dem Laufwerk angebracht ist, was dem Laufwerk (1) ermöglicht, während des Betriebs selbstangetrieben zu sein.

10. Vorrichtung nach einem der Ansprüche 1 bis 9, dadurch gekennzeichnet, daß das Zugmittel (21) eine auf dem Fahrzeug angebrachte bewegliche Winde umfasst, die über dem Graben (4) angeordnet ist.

11. Verfahren zum Verlegen einer Folge von elastischen, durch Zapfen und Steckdose verbundenen Schiebesitzrohren (14, 18, 19) in einem vorbereiteten Graben (4) in der Erde, indem ein Förderlaufwerk (1) entlang dem vorbereiteten Graben (4) angeordnet wird, der einen langgestreckten Förderer (2) trägt, der in dem Graben (4) geneigt ist, wobei ein Ende des Förderers (2) an oder neben dem Boden (5) des Grabens angeordnet ist, und das andere Ende wenigstens auf einem Stück entlang der Höhe des Grabens (4), wobei das Förderlaufwerk (1) ortsfest entlang des Grabens (4) gehalten werden kann, und sich entlang des Grabens (4) in die Richtung dessen oberen Endes bewegen kann; indem ein durch Zapfen und Steckdose verbundenes Schiebesitzrohr (18) auf das Förderlaufwerk (1) gebracht wird, und ihm gestattet wird, sich den geneigten Förder (2) herunterzubewegen, ein anderes elastisches, durch Zapfen und Steckdose verbundenes Schiebesitzrohr (14) auf das Förderlaufwerk gebracht wird, und ihm auch gestattet wird, sich den geneigten Förderer (2) herunterzubewegen, bis sein Zapfen oder seine Steckdose in das jeweilige (je nach Fall) benachbarte Steckdosen- (13) oder Zapfenende des Rohrs eingreift, das vorher auf dem Förder angeordnet war, gekennzeichnet durch Eingriff des oberen Endes des oberen Rohrs (14) mit einer Zugleitung (11), die entlang des Förderlaufwerks (1) in die Richtung des Förderers (2) zu einem Drehmittel (12) geht, und die Leitung dann auf das obere Ende des Förderers zum Zugmittel (21) zurückgegeben wird; das Förderlaufwerk gegen Bewegung entlang des Grabens festgehalten wird, und eine Zugkraft auf die Zugleitung (11) durch das Zugmittel (21) ausgeübt wird, durch die das obere Rohr (14) entlang des Förderers (2) nach unten gedrängt wird, um eine Verbindung zwischen den aneinander angrenzenden Zapfen und Steckdose des oberen Rohrs (14) und des unteren Rohrs (18) zu bilden; das Förderlaufwerk (1) zur Bewegung entlang des Grabens (4) freigegeben wird, und eine Zugkraft auf die Zugleitung (11) durch das Zugmittel (21) ausgeübt wird, wodurch der Förderer (2) in dem Graben (4) in die Richtung des höheren Endes des Förderers (2) bewegt wird, bis das obere Rohr (14) tiefer auf dem Förderer angeordnet ist, so daß noch ein anderes Rohr auf dem Förderer (2) über und hinter dem oberen Rohr (14) verlegt werden kann, und der Betrieb wiederholt werden kann.

12. Verfahren nach Anspruch 11, dadurch gekennzeichnet, daß das Zugmittel (21) auf dem Förderlaufwerk (1) angebracht ist, und das den Schritt einschließt, das Rohr, das schon auf dem Förderer ist, an dem Laufwerk zu befestigen, während eine Last auf ein oberes Rohr (14) auf dem Förderer angewandt wird, wodurch die erforderte Verbindung zwischen dem oberen Rohr (14) und dem unteren Rohr (18) gebildet wird.

## Revendications

1. Appareil de pose d'une série de conduits à joints flexibles à emboîtement d'ajustage gras mâle/femelle (14, 18, 19) dans une tranchée (4) préparée au préalable dans le sol comportant un chariot convoyeur (1) portant un convoyeur en longueur (2) agencé en service sur le chariot (1) tel à être incliné dans la tranchée (4), le convoyeur (2) ayant dans la tranchée (4) une extrémité située au fond (5) ou à proximité, et l'autre extrémité située au minimum à hauteur partielle de la tranchée (4), le chariot convoyeur (1) étant susceptible de déplacement le long de la tranchée (4) dans le sens de l'extrémité supérieure du convoyeur (2), et des moyens prévus pour immobiliser le chariot (1) le long de la tranchée (4), caractérisé par des moyens (15) d'engagement d'une extrémité supérieure de conduit (14, 18, 19) posé sur le convoyeur (2), lesdits moyens (15) étant raccordés à un câble de traction (11) passant le long du chariot (1) dans le sens de l'extrémité inférieure du convoyeur (2) accroché à un dispositif de renvoi (12) pour revenir dans le sens de l'extrémité supérieure du convoyeur (2) vers un moyen de traction (21).

2. Appareil tel que revendiqué à la revendication 1 caractérisé en ce que le chariot (1) du convoyeur en longueur (2) comporte un jeu de galets (3) facilitant l'avancement des conduits (14, 18, 19) qui roulent vers le niveau inférieur du convoyeur incliné (2).

3. Appareil tel que revendiqué à la revendication 1 ou 2 caractérisé en ce que la longueur du chariot (2) est telle à être inférieure à la longueur des conduits (14, 18, 19) à poser.

4. Appareil tel que revendiqué à l'une quelconque des revendications précédentes caractérisé en ce que l'extrémité inférieure du chariot convoyeur (1) est posée sur des moyens (16) facilement déplacés le long du fond (5) de la tranchée (4).

5. Appareil tel que revendiqué à la revendication 4 caractérisé en ce que le chariot convoyeur (1) est monté sur un traîneau (6).

6. Appareil tel que revendiqué à l'une quelconque des revendications précédentes caractérisé en ce que le chariot convoyeur (1) est soutenu incliné par l'intermédiaire d'une paire au minimum de galets (7) côte à côte portés par un bâti (8) attaché au chariot convoyeur (1), ladite ou lesdites paires de galets (7) étant séparée(s) d'une largeur supérieure à celle de la tranchée prévue pour la pose éventuelle des conduits (14, 18, 19).

7. Appareil tel que revendiqué à la revendication 6 caractérisé en ce que les moyens d'immobilisation (10) du chariot convoyeur (1) comportent des freins associés au minimum avec ladite ou une seule paire desdits galets (7).

8. Appareil tel que revendiqué à l'une quelconque des revendications précédentes caractérisé en ce que les moyens d'immobilisation (10) du chariot convoyeur (1) comportent des ancrages au sol.

9. Appareil tel que revendiqué à l'une quelconque des revendications précédentes caractérisé en ce que les moyens de traction (21) sont montés sur le chariot, ledit chariot (1) étant ainsi auto-propulsé.

10. Appareil tel que revendiqué à l'une quelconque des revendications 1 à 9 caractérisé en ce que les moyens de traction (21) comportent un treuil monté sur véhicule mobile agencé pour être disposé au dessus de la tranchée.

11. Méthode de pose d'une série de conduits à joints flexibles d'emboîtement à ajustage gras mâle/femelle (14, 18, 19) dans une tranchée (4) préparée dans le sol en installant le long de la tranchée ainsi préparée un chariot convoyeur (1) à convoyeur en longueur (2) incliné dans la tranchée (4), avec une extrémité du convoyeur (2) disposée au fond (5) ou à proximité du fond de la tranchée (4), et l'autre extrémité située au minimum à hauteur partielle de la tranchée (4), le chariot convoyeur (1) étant apte à l'immobilisation le long de la tranchée (4) et de déplacement le long de la tranchée (4) dans le sens de l'extrémité supérieure; -- la pose d'un conduit (18) à joints flexibles d'ajustage gras à emboîtement sur le chariot convoyeur (1) lui permettant le déplacement vers le bas du convoyeur incliné (2); la pose d'un autre conduit (14) à joints flexibles d'emboîtement à ajustage gras sur le chariot convoyeur (1) lui permettant aussi de se déplacer vers le bas du convoyeur incliné (2) jusqu'à ce que l'extrémité d'emboîtement mâle ou femelle respectivement (selon le cas) fasse prise avec l'extrémité correspondante femelle (20) ou mâle (13) respectivement (selon le cas) du conduit posé au préalable sur le convoyeur, caractérisé par l'engagement de l'extrémité supérieure du conduit supérieur (14) avec un câble de traction (11) passant le long du chariot convoyeur (1) dans le sens du convoyeur (2) vers un dispositif de renvoi (12) et le retour du câble de traction vers l'extrémité supérieure du convoyeur au dispositif de traction (21); l'immobilisation du chariot convoyeur (1) contre le mouvement le long de la tranchée, et par l'intermédiaire dudit dispositif de traction (21) l'application d'une force de traction (11), suivant laquelle le conduit supérieur (14) est propulsé vers le bas le long du convoyeur (2) pour former le joint entre les extrémités juxtaposées mâle et femelle du conduit supérieur (14) et du conduit inférieur (18); la libération du chariot convoyeur (1) pour se déplacer le long de la tranchée (4) et par l'intermédiaire dudit dispositif de traction (21), l'application d'une force de traction sur le câble de traction (11) de manière à déplacer le convoyeur (2) dans la tranchée (4) dans le sens de l'extrémité supérieure du convoyeur (2), jusqu'à ce que le conduit supérieur (14) se trouve situé plus bas le long du convoyeur de telle façon à permettre la pose d'un autre conduit sur le convoyeur (2) au dessus et à l'arrière du conduit supérieur (14), l'opération étant alors reprise.

12. Méthode telle que revendiquée à la revendication 11 caractérisée en ce que le dispositif de traction (21) est monté sur le chariot convoyeur (1) et comportant la phase de raccord du conduit déjà en place sur le chariot alors qu'une charge est appliquée à un conduit supérieur (14) placé sur le convoyeur de telle façon à former le joint requis entre le conduit supérieur (14) et le conduit inférieur (18).
